# EUROPÄISCHE PATENTSCHRIFT

(11) **EP 2 456 999 B1**
(45) Veröffentlichungstag und Bekanntmachung des Hinweises auf die Patenterteilung: **11.09.2013**
(21) Anmeldenummer: 10739512.1
(22) Anmeldetag: 20.07.2010
(51) Int. Cl.: F16F 9/53, F16F 9/46

(54) **EINSTELLBARES VENTIL MIT ÜBERGANGSBEREICH**
ADJUSTABLE VALVE WITH A TRANSITION REGION
VANNE RÉGLABLE AVEC ZONE DE TRANSITION

(30) Priorität: 21.07.2009 DE 102009034297
(43) Veröffentlichungstag der Anmeldung: 30.05.2012
(73) Patentinhaber: Inventus Engineering GmbH, 6771 St. Anton Im Montafon (AT)
(72) Erfinder: BATTLOGG, Stefan, A-6771 St. Anton im Montafon (AT); PÖSEL, Jürgen, A-6700 Bludenz (AT); ELSENSOHN, Gernot, A-6771 St. Anton im Montafon (AT)
(74) Vertreter: Schütte, Hartmut
(86) Internationale Anmeldenummer: PCT/EP2010/004420
(87) Internationale Veröffentlichungsnummer: WO 2011/009586

(56) Entgegenhaltungen:
- WO-A1-99/58873
- DE-A1- 10 337 516
- DE-T2- 69 821 799
- JP-A- 59 017 039
- US-B1- 6 471 018

## Beschreibung

Die vorliegende Erfindung betrifft ein einstellbares Ventil, welches den Durchfluss von magnetorheologischen oder elektrorheologischen Flüssigkeiten (MRF bzw. ERF) beeinflussen kann. Die Beeinflussung des das Ventil durchströmenden Mediums erfolgt über ein magnetisches bzw. elektrisches Feld.

Durch Kettenbildung ferromagnetischer Partikel bzw. kleiner Dipole im Bereich des Feldes kann die Viskosität des Fluids verändert werden. üblicherweise wird so im Feldbereich die Viskosität gegenüber Bereichen außerhalb des Feldes deutlich erhöht.

Das Fluid reagiert auf Feldänderungen sehr schnell, im Bereich von wenigen ms und darunter, weshalb Ventile nach diesem Konzept sehr schnell verstellt werden können. Ein weiterer Vorteil solcher Ventile ist, dass die Verstellung ohne bewegte mechanische Teile erfolgen kann.

Die vorliegende Erfindung wird am Beispiel eines Ventils für magnetorheologische Flüssigkeiten beschrieben, sie gilt aber sinngemäß für alle Flüssigkeiten, deren rheologischen Eigenschaften feldabhängig sind.

Magnetfelder können mit Dauermagneten oder Elektromagneten, d.h. stromdurchflossenen Spulen erzeugt werden. Als Stand der Technik kann hier DE 698 21 799 T2 genannt werden, wo verschiedene Konzepte zur Beeinflussung eines Durchgangskanals durch ein Magnetfeld eines Dauermagneten dargestellt werden.

Nachteilig kann bei bestimmten Anwendungen sein, dass der gesamte Durchgangskanal von einem Magnetfeld durchflutet ist. Soll so ein Ventil beispielsweise in einem Dämpfer eingesetzt werden, dann kommt es zu einem "Durchbrechen" sobald die Kraft auf den Kolben im Dämpfer einen bestimmten Wert überschreitet. Abhängig vom eingestellten Magnetfeld, muss zunächst eine gewisse "Losbrechkraft" überschritten werden, wenn der Kolben aus dem Stillstand beschleunigt werden soll. Diese Losbrechkraft wird durch die Schubspannung des MRF erzeugt, dessen Fließverhalten im Magnetfeld durch das Bingham-Modell beschrieben werden kann.

Um dieses Problem zu umgehen sind Lösungen mit einem oder mehreren Bypässen bekannt, wie beispielsweise in WO 99/58873 dargestellt. Parallel zum Durchgangskanal überbrückt ein Bypass, welcher nicht im magnetischen Feld liegt, das Ventil. In diesem Bypass verhält sich das MRF wie eine Newtonsche Flüssigkeit, d.h. das MRF kann ohne Schubspannung bewegt werden.

Wird beispielsweise der Druck-Geschwindigkeitsverlauf eines Dämpfers mit MRF-Ventil und Bypass aufgezeichnet, dann strömt bei kleinen Geschwindigkeiten das MRF ausschließlich durch den Bypass. Mit steigender Geschwindigkeit erhöht sich der Druckverlust im Bypass bis diese Druckdifferenz einen kritischen Wert Pkrit, entsprechend der Schubspannung des MRF im Durchgangskanal, erreicht. Ab diesem Druck strömt das MRF durch den Bypass und den Durchgangskanal, weshalb der Druck bei weiter steigender Geschwindigkeit weniger stark ansteigt als zuvor.

Bei manchen Applikation kann dieser Knick bei Pkrit im Druck-Geschwindigkeitsverlauf nicht toleriert werden. Beispielsweise ist bei Stoßdämpfern am Fahrrad ein sanfter Übergang vom "low speed" in den "high speed" Bereich sehr wichtig, die Knickstelle im Druck-Geschwindigkeitsverlauf muss stark gerundet werden. Erst dann zeichnet sich ein Dämpfer durch hohen Fahrkomfort und erhöhte Sicherheit durch besseren Fahrbahnkontakt aus.

Zur Erzeugung der gewünschten Dämpfungskennlinien können bei rein mechanischen Systemen federbeaufschlagte Ventile an den Bypässen eingesetzt werden(beispielsweise WO 99/58873, Fig. 3a).

Ebenfalls Stand der Technik ist die Beeinflussung eines MRF-Ventils durch elektrische Spulenanordnungen, welche die magnetische Feldstärke im Durchgangskanal über eine geeignete Steuerung des Spulenstroms regeln wie beispielsweise in DE 103 37 516 A1. Mit einem entsprechenden Aufwand an Sensoren und Regelung kann mit einem elektrischen Ventil in einem Dämpfer jede beliebige Kurve im Arbeitsbereich des Dämpfers angesteuert werden.

Die elektrische Lösung benötigt immer Strom, was eine entsprechend dimensionierte Stromversorgung bedingt, da je nach Arbeitsbereich des Dämpfers der Energiebedarf sehr groß sein kann. Zudem sind die Anforderungen an die Sensorik und die Regelung recht hoch, da die Verstellung des Feldes quasi in Echtzeit erfolgen muss.

Die Aufgabe der vorliegenden Erfindung ist ein verstellbares Ventil für MRF oder ERF zur Verfügung zu stellen, welches derart gestaltet ist, dass die beispielsweise für eine Anwendung als Dämpfer am Fahrrad erforderlichen Dämpfungskennlinien ohne besonderen Aufwand erzielt werden. Die über einen weiten Bereich einstellbare Druck-Geschwindigkeitskennlinie des Ventils lässt sich im Vergleich zu nicht elektrischen Lösungen nach dem Stand der Technik einfach und durch Veränderungen des magnetischen Feldes, auch ohne direkten mechanischen Kontakt in den druckbeaufschlagten Innenbereich des Ventils, verstellen.

Möglich wird dies durch ein Ventil nach Anspruch 1, bei dem zumindest ein Durchgangskanal nur teilweise von dem Feld durchflutet wird. Dabei weist das Feld einen Gradienten auf, der quer zur Strömungsrichtung des Fluids ausgerichtet ist. Der Gradient des Feldes kann insbesondere auch quer zu der jeweils lokalen Strömungsrichtung sein. Der Gradient kann im Wesentlichen senkrecht bzw. normal zur Strömungsrichtung des Fluids ausgerichtet sein. Wichtig ist, dass unterschiedliche Bereiche eines Querschnittes unterschiedlich starke Felder aufweisen können. Dadurch kann sich der Widerstand der Strömungsbahn einzelner Partikel von dem Widerstand benachbarter Strömungsbahnen unterscheiden. Der Widerstand verschiedener Strömungsbahnen durch den Querschnitt des Ventils kann sich vorzugsweise um mehr als einen Faktor zehn und insbesondere einhundert voneinander unterscheiden.

Der Durchgangskanal wird dadurch - elektrisch (ERF) oder magnetfeldtechnisch (MRF) gesehen - in drei Bereiche/Zonen geteilt. Bei einem Querschnitt durch das Ventil lässt sich die Querschnittsfläche des Durchgangskanals in folgende Bereiche einteilen, wobei einzelne Bereiche auch mehrfach vorkommen können: einen Sperrbereich, der voll im Magnetfeld liegt, einen Durchlassbereich, der außerhalb des Magnetfelds liegt und in einen Übergangsbereich, der zwischen Durchlass- und Sperrbereich liegt. Der Durchlassbereich entspricht dem außerhalb des Magnetfeldes liegenden Bypass und der Sperrbereich dem vollständig magnetisch beaufschlagten Durchgangskanal nach dem Stand der Technik. Diese Abtrennung erfolgt nicht durch mechanische Begrenzungen sondern entspricht einer virtuellen Einteilung anhand der herrschenden Feldstärke. Möglich ist es aber auch, dass unterschiedliche Durchgangskanäle mit unterschiedlichen Feldern beaufschlagt werden, um über einem Querschnitt ein stark inhomogenes Feld bereit zu stellen.

Neu ist der Übergangsbereich, der hauptsächlich durch magnetische Streufelder gebildet wird. In diesem wirkt das Magnetfeld mit zunehmender Stärke in Richtung des Sperrbereichs, jedoch mit keinem oder nur wenig Feld im Übergang zum Durchlassbereich. Wird die Magnetfeldstärke erhöht, verändert sich die magnettechnische Bereichsaufteilung, d.h. der Sperrbereich wird größer und der Bypassbereich kleiner.

Ein derart konstruiertes Ventil zeigt im Druck-Geschwindigkeitsdiagramm das Verhalten, dass bei sehr kleinen Geschwindigkeiten das MRF nur im "offenen" Durchlassbereich strömt. Mit zunehmender Strömungsgeschwindigkeit steigt die Druckdifferenz des Ventils an bis die entsprechende Schubspannung angrenzender MRF-Ketten im Übergangsbereich erreicht wird und diese mitgerissen werden. Mit steigender Strömungsgeschwindigkeit vergrößert sich folglich der Durchlassbereich auf Kosten des Übergangsbereichs. Der Bypass ist dadurch nicht mehr mechanisch begrenzt, sondern von der Strömungsgeschwindigkeit und vom magnetischen Streufeld (und deren daraus resultierende Kettenbildung im MRF) abhängig.

Mit weiter steigender Strömungsgeschwindigkeit wird der Durchlassbereich weiter ausgedehnt, bis er den Übergangsbereich komplett eingenommen hat. Noch höhere Geschwindigkeiten bewirken den Durchbruch des Sperrbereichs, das MRF strömt dann im gesamten Durchgangskanal. Bedingt durch den Übergangsbereich erfolgt der Durchbruch aber als fließender Übergang. Abhängig vom Übergangsbereich kann die Druck-Geschwindigkeitskennlinie eines solchen Ventils einen sanften Übergang zum Durchbruchsbereich zeigen.

Dieser Vorgang ist vollkommen reversibel, mit sinkender Strömungsgeschwindigkeit kommt der MRF-Fluss im Sperrbereich wieder zum Erliegen und der Übergangsbereich kann sich wieder aufbauen.

Ein wesentliches Merkmal der Erfindung ist, dass die Felderzeugungseinheit ein inhomogenes Feld erzeugen kann. Dabei soll das Feld im Wesentlichen quer zu der Strömungsrichtung oder sogar normal auf die Strömungsrichtung des Fluids inhomogen sein, um die beschriebenen Bereiche ausbilden zu können. Mit einem nur in Strömungsrichtung inhomogenen Feld lässt sich der beschriebene Effekt nicht erreichen, das Ventil verhält sich gleich wie ein Ventil mit einem komplett gleichförmigen Feld mit einer bestimmten Stärke.

Durch die Inhomogenität des Feldes wird der Anteil der Querschnittsfläche einstellbar, der einem unterdurchschnittlich oder einem überdurchschnittlich starken Feld ausgesetzt ist. Die maximale oder minimale im Querschnitt wirkende Feldstärke muss dabei nicht verändert werden, sondern es wird der Querschnittsanteil verändert, über dem die Feldstärke von dem maximalen auf den minimalen Wert abfällt.

Durch das Ausbilden von verschiedenen Bereichen kann ein erfindungsgemäßes Ventil abhängig vom Magnetfeld und dem Druckunterschied das Strömen des Fluids komplett verhindern, nur in einem Teilbereich oder auch im gesamten Durchgangskanal zulassen. Ein Ventil nach dem Stand der Technik kann nur den Durchgangskanal als Ganzes steuern: entweder er sperrt die Strömung oder er lässt sie (mit von der mittleren Feldstärke abhängigem Strömungswiderstand) zu.

Der Durchlassbereich entspricht einer (variablen) Leckage oder einem (variablen) Bypass und der Übergangsbereich einer Schwachstelle eines herkömmlichen Ventils, weshalb solche Feldbereiche bisher üblicherweise vermieden wurden. Die vorliegende Erfindung variiert und nützt diese Bereiche gezielt als Einstellmöglichkeit um besonders vorteilhafte Ventilkennlinien einfach erreichen zu können.

Im Gegensatz zum Stand der Technik kann bei der vorliegenden Erfindung auf den Einsatz zusätzlicher Bypässe oder federbeaufschlagter Ventile in der Regel verzichtet werden. Dadurch kann ein Ventil nach Ausführung dieser Erfindung sehr zuverlässig und robust aufgebaut werden. Der einfache Aufbau ermöglicht auch Bauraum- und Gewichtsersparnis und eine kostengünstigere Herstellung.

Ein weiterer Vorteil ist, dass ein Ventil nach Art dieser Erfindung sehr schnell auf Druckspitzen reagieren kann. Lediglich die Trägheit des Fluids selbst begrenzt die Reaktionszeit, Ansprechzeiten mechanischer Bauelemente entfallen völlig. Eine plötzlich auftretende Druckspitze kann über den gesamten Durchgangskanal, also über den Durchlass-, Übergangs- und Sperrbereich, abgeleitet werden, da alle MRF-Ketten mitgerissen werden. Sobald der Überdruck abgeleitet ist stellt sich der Ausgangszustand des Ventils sofort wieder her. Dadurch kann eine sonst möglicherweise notwendige Überdruckeinrichtung entfallen.

Eine Veränderung der Druck-Geschwindigkeitskennlinie des Ventils über einen großen Bereich bedingt lediglich eine Änderung des Magnetfelds. Dadurch kann eine Einstellung am Ventil vorgenommen werden, ohne eine mechanische Verbindung in den mit Druck beaufschlagten Innenraum des Ventils herstellen zu müssen. Dichtungen können hierfür somit entfallen.

Eine Ausgestaltung dieser Erfindung zeigt die Anwendung in einem Hinterraddämpfer eines Fahrrads. Diese verdeutlicht, dass durch die erfindungsgemäße kontaktlose Einstellmöglichkeit des Ventils neue Bedienkonzepte möglich werden. Durch die mittig am Dämpfer angebrachten Einstellringe kann die Ergonomie deutlich gesteigert werden, da diese bei einem üblichen Einbau des Dämpfers wesentlich leichter zu erreichen und durch ihre Größe leichter zu bedienen sind als bei Dämpfern nach dem Stand der Technik.

Wird ein Ventil nach vorliegender Erfindung elektrisch betrieben, so bietet sich durch die bessere Anpassung auf den Arbeitsbereich die Möglichkeit sehr effizient arbeitende Ventile zu bauen, die im Vergleich zum Stand der Technik weniger Energie benötigen. Zudem kann die Sensorik vereinfacht werden bzw. komplett auf diese verzichtet werden und die Anforderungen an die Steuerung sind deutlich reduziert.

Möglich ist dies, da der Kurvenverlauf durch die Form des Magnetfeldes im Ventil quasi systemimmanent ist und die Steuerung lediglich bei Änderungen des Kurvenverlaufs eingreifen muss. Diese Änderungen können aber völlig unabhängig von der aktuellen Geschwindigkeit, Druck, Position oder sonstigen Bedingungen durchgeführt werden, weshalb auf Sensoren möglicherweise verzichtet werden kann.

Zudem kann in Kombination mit einem Dauermagneten das magnetische Grundfeld so an die Applikation angepasst werden, dass nur bei Änderungen des Grundzustands elektrische Energie benötigt wird. Über die Spule werden nur noch Stärke und/oder der Verlauf des Magnetfeldes ausgehend vom magnetischen Grundfeld variiert, was zu deutlichen Energieeinsparungen führen kann.

Die erfindungsgemäße Vorrichtung umfasst ein Ventil für MRF oder ERF, welches über mindestens einen Durchgangskanal verfügt, in dem die rheologischen Eigenschaften des Fluids durch ein entsprechendes Feld verändert werden können.

Des Weiteren umfasst die Vorrichtung eine Felderzeugungseinheit, die ein variables magnetisches oder elektrisches Feld zumindest in Teilbereichen des Durchgangskanals erzeugt. Kennzeichnend ist dabei, dass in Durchflussrichtung des Fluids gesehen Bereiche des Durchgangskanals nicht oder entsprechend weniger vom Feld durchflutet werden als andere Bereiche.

Vorzugsweise dient als Felderzeugungseinheit ein Dauermagnet, es können aber auch mehrere Dauermagnete, eine oder auch mehrere elektrische Spulen oder eine Kombination aus Dauermagneten und Spulen eingesetzt werden.

Um das Magnetfeld auch mit Dauermagneten variieren zu können ist es von Vorteil, diese verschiebbar zu gestalten. Dabei können diese über eine Längsverschiebung oder Drehbewegung gegenüber dem Durchgangskanal seitlich verschoben werden oder der Abstand zum Durchgangskanal verändert werden.

Denkbar ist auch, dass das Magnetfeld zumindest teilweise durch Polstücke aus ferromagnetischem Material beeinflusst wird. Dabei kann beispielsweise durch bewusstes Herbeiführen von Sättigungserscheinungen das Magnetfeld geschwächt oder umgeformt werden. Derselbe Effekt lässt sich auch durch magnetische Kurzschlussbrücken aus ferromagnetischem Material oder auch durch magnetische Isolation durch magnetisch nicht oder schlecht leitende Materialien herbeiführen.

Ziel dieser Maßnahmen ist, das Magnetfeld im Durchgangskanal in Form und/oder Stärke quer zu der Strömungsrichtung zu variieren und den Kanal in Durchlass-, Übergangs- und Sperrbereich einteilen zu können. Daraus entsteht wiederum die spezifische Druck-Geschwindigkeitskennlinie eines Ventils, welche direkt vom Magnetfeld und somit wiederum von der Stellung des Magneten bzw. der oben beschriebenen feldformenden Elemente abhängt.

Um den Effekt des Übergangsbereichs zu verstärken können auch mehrere Übergangsbereiche und/oder Bypassbereiche eingesetzt werden. Möglich ist dies durch eine kammartige Gestaltung der Polflächen am Durchgangskanal. Diese bündeln die Feldlinien zu lokalen Maxima und dünnen das Feld dazwischen aus. Zwischen Bereichen mit maximaler und Bereichen mit minimaler Feldstärke befinden sich Übergangsbereiche. Bereiche mit gar keiner oder minimaler Feldstärke sind Bypassbereiche.

Die erfindungsgemäße Ventileinrichtung umfasst wenigstens einen Durchgangs- oder Strömungskanal, sowie eine Felderzeugungseinrichtung, wobei in dem Durchgangskanal ein durch ein Feld beeinflussbares Fluid vorgesehen ist und die Felderzeugungseinrichtung dafür vorgesehen ist, mit einem Feld auf das durch ein Feld beeinflussbare Fluid in dem Durchgangskanal einzuwirken. Wenigstens eine Einstelleinrichtung ist vorgesehen, mit welcher das in dem Durchgangskanal wirkende Feld einstellbar ist. Weiterhin ist wenigstens ein Anteil der Querschnittsfläche des Durchgangskanals einstellbar, der einem Feld bestimmter Stärke ausgesetzt ist, sodass der Durchgangskanal auch nur teilweise einem Feld bestimmter Stärke aussetzbar ist.

Eine andere Ventileinrichtung umfasst vorzugsweise einen Durchgangskanal sowie eine Felderzeugungseinrichtung, wobei in dem Durchgangskanal ein durch ein Feld beeinflussbares Fluid vorgesehen ist und die Felderzeugungseinrichtung dafür vorgesehen ist mit einem Feld auf das durch ein Feld beeinflussbare Fluid in dem Durchgangskanal einzuwirken. Dabei weist der Durchgangskanal quer zu der Strömungsrichtung gesehen wenigstens einen Übergangsbereich und wenigstens einen darin übergehenden Sperrabschnitt und/oder wenigstens einen darin übergehenden Durchlass-Abschnitt auf. Die einzelnen Bereiche verlaufen dabei im Wesentlichen parallel zur Strömungsrichtung.

In dem Durchlass-Abschnitt wirkt das Feld gar nicht oder nur sehr gering. Wenigstens ein Übergangsbereich grenzt an den Wirkabschnitt und/oder den Bypass-Abschnitt an.

Vorzugsweise grenzt wenigstens ein Übergangsbereich an den Wirkabschnitt und/oder den Bypass-Abschnitt an.

Die Ventileinrichtung kann wenigstens eine Einstelleinrichtung aufweisen, mit welcher das in dem Durchgangskanal wirkende Feld einstellbar ist. Eine Einstelleinrichtung im Sinne dieser Erfindung kann mechanisch und/oder elektrisch arbeiten und über eine mechanische und/oder elektrische Verstellung das Feld auf den Dämpfungskanal beeinflussen.

Vorzugsweise ist wenigstens ein Anteil des Durchgangskanals einstellbar, der einem Feld bestimmter Stärke ausgesetzt ist, sodass der Durchgangskanal auch nur teilweise einem Feld bestimmter Stärke aussetzbar ist.

Mit der Einstelleinrichtung kann bei der Ventileinrichtung der Flächenanteil der Querschnittsfläche des Durchgangskanals und/oder der Volumenanteil des Durchgangskanals einstellbar sein, auf welchen ein Feld bestimmter Stärke einwirkt. Die Trennung des Anteils von anderen Bereichen erfolgt entlang der Durchströmungsrichtung anhand der Feldstärke, welche über den Querschnitt des Durchgangskanals inhomogen sein muss.

Die Querschnittsfläche des Durchgangskanals setzt sich aus den Querschnittsflächen des Sperrabschnitt, des Durchlass-Abschnitts und des Übergangsbereich zusammen. Der Übergangsbereich ist insbesondere einstellbar.

Die Stärke des auf den Durchgangskanal einwirkenden Feldes ist vorzugsweise einstellbar.

Die Felderzeugungseinrichtung umfasst insbesondere eine Magneteinrichtung, um ein magnetisches Feld als Feld zu erzeugen. Das durch ein Feld beeinflussbare Fluid umfasst vorteilhafterweise wenigstens ein magnetorheologisches Fluid.

Die Magneteinrichtung kann wenigstens einen Dauermagneten umfassen.

Die Einstelleinrichtung kann wenigstens ein längsverschiebbares Einstellelement und/oder wenigstens eine Dreheinrichtung umfassen. Die Dreheinrichtung kann wenigstens einen Dauermagneten umfassen. Die Einstellvorrichtung kann auch aus zumindest einem Permanentmagneten und einer Spule oder auch aus mehreren Spulen bestehen, wobei diese nicht beweglich ausgeführt sein müssen. Das Magnetfeld kann in diesem Fall über den Strom in zumindest einer Spule eingestellt werden.

Vorzugsweise ist wenigstens eine Dreheinheit auf der Außenseite eines Ventilgehäuses vorgesehen. Ein Steuerventil kann vorgesehen sein.

Die Einstellung des Strömungs- bzw. Durchgangkanals erfolgt vorzugsweise ohne direkten mechanischen Kontakt nur über das Magnetfeld. Das Feld wirkt insbesondere durch das Magnetfeld und durch das Ventilgehäuse hindurch.

Der Anteil des Durchgangskanals, der keinem Feld ausgesetzt ist und somit als Bypass-Abschnitt wirkt, ist insbesondere über eine Einstelleinrichtung veränderbar.

Der Anteil des Strömungskanals, der einem teilweisen Feld, d.h. dem Übergangsbereich vom schwächsten zum stärksten Bereich des Magnetfeldes, ausgesetzt ist, ist vorzugsweise veränderbar.

Durch mehrere Polpaare der Magneteinrichtung können mehrere Übergangsbereiche im Strömungskanal erzeugt werden. Die folgenden Figuren zeigen die Grundlagen und einige Vorteile dieser Erfindung und stellen Ausführungsbeispiele der erfindungsgemäßen Anwendung dar.

Dabei zeigen die Figuren:
- Fig. 1: die Kennlinie eines MRF-Ventils bei verschiedenen Feldstärken;
- Fig. 2: die Kennlinie eines MRF-Ventils mit Bypass bei einer bestimmten Feldstärke;
- Fig. 3: die Kennlinie eines erfindungsgemäßen MRF-Ventils mit Übergangsbereich;
- Fig. 4: eine schematische Darstellung eines MRF-Ventils mit Übergangsbereich;
- Fig. 5: eine schematische Ansicht einer elektrischen Magneteinrichtung mit einer Kammstruktur zur Vergrößerung des Übergangsbereichs;
- Fig. 6: eine schematische Ansicht einer Magneteinrichtung mit einer Kammstruktur von Dauermagneten zur Vergrößerung des Übergangsbereichs;
- Fig. 7: eine perspektivische schematische Darstellung eines Fahrraddämpfers mit einem MRF-Ventil;
- Fig. 8: eine geschnittene schematische Darstellung des Fahrraddämpfers mit einem MRF-Ventil nach Fig. 7;
- Fig. 9: einen Querschnitt durch das MRF-Ventil des Fahrraddämpfers nach Fig. 7;
- Fig. 10: eine schematische Ansicht einer Magneteinrichtung mit zwei Elektromagneten;
- Fig. 11: eine schematische Ansicht der Magneteinrichtung nach Fig. 10 in einem anderen Betriebszustand;
- Fig. 12: eine weitere schematische Ansicht einer Magneteinrichtung;
- Fig. 13: eine schematische Ansicht eines Dämpfers mit einem MRF-Ventil an einem künstlichen Kniegelenk; und
- Fig. 14: zeigt schematisch zwei Verläufe der Feldstärke über dem Querschnitt des Durchgangskanals.

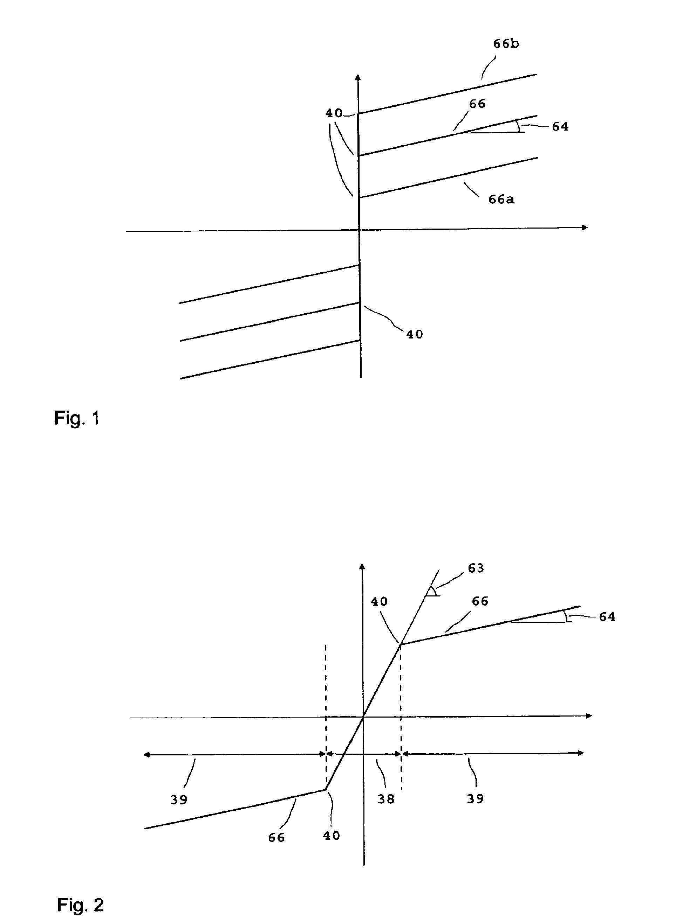

Die Figuren 1 bis 3 zeigen Kennlinien 66, 66a und 66b (Druck-Geschwindigkeitsverläufe) von verschiedenen Ausführungen eines MRF-Ventils 4. Analog zum Druck kann auch die Kraft des Ventils 4 aufgetragen werden, beispielsweise die Gegenkraft auf den Kolben 18 wenn das Ventil als Dämpfer 22 oder in einem Dämpfer 1 eingesetzt wird. Die Geschwindigkeit stellt die Durchflussgeschwindigkeit des strömenden Fluids als Summe aller möglichen Einzelströmungen bzw. die Verfahrgeschwindigkeit des Kolbens 18 beim Dämpfer 22 dar.

In Fig. 1 ist der gesamte Durchgangskanal 6 des Ventils 4 von einem homogenen Magnetfeld 44 durchsetzt. Abhängig von der Stärke des Magnetfeldes stellt sich eine Schubspannung ein, welche überwunden werden muss damit das Fluid strömen kann. Unterhalb dieser "Losbrechkraft" ist kein Durchfluss möglich, schließt das Ventil also vollständig. Es ergeben sich in beide Durchflussrichtungen Knickpunkte 40 und Steigungen 64 der (Ventil)-Kennlinie 66. Die Linie 66 kann durch ein stärkeres Magnetfeld annähernd parallel nach oben (Linie 66b) oder nach unten zur Kennlinie 66a verschoben werden.

Kennzeichnend für ein solches Ventil ist, dass auch ohne Durchfluss ein Druck aufgebaut werden kann. Üblicherweise kommt diese Ventilgeometrie zum Einsatz, wenn das Feld mit Spulen erzeugt wird.

Fig. 2 zeigt die Kennlinie 66 eines MRF-Ventils 4 mit Bypass. Dabei ist der Bypass nicht durch zusätzliche Elemente wie federbeaufschlagte Ventile variabel gestaltet, sondern wie bei typischen Anwendungen beispielsweise im KFZ-Bereich konstant offen.

Der Bypass ermöglicht den Nulldurchgang, womit ohne Fluidströmung bzw.

Kolbenbewegung auch kein Druck aufgebaut werden kann. Im unteren Geschwindigkeitsbereich (Low-Speed-Bereich 38) bestimmt der Bypass den Kurvenverlauf 66, ab einem bestimmten Druck Pkrit an der Knickstelle 40 strömt das Fluid durch den Bypass und den Durchgangskanal 6, die Kurve verläuft flacher. Der Druck, an dem dieser Übergang stattfindet entspricht dem Druck, dem das MRF im Durchgangskanal 6 auf Grund der Schubspannung durch das Magnetfeld standhalten kann.

Je nach Ausführung und nach Vergrößerungsmaßstab der Betrachtung kann der Kurvenverlauf 66 an der Knickstelle 40 eine leichte Rundung aufweisen, die durch "Störfaktoren" wie beispielsweise Inhomogenitäten im Feld, Trägheit im Aufbau usw. erzeugt wird. Im Low-Speed-Bereich 38 verläuft die Kennlinie 66 mit einer Steigung 63, während die Steigung 64 im High-Speed-Bereich 39 flacher ist, da sowohl der Bypass als auch der

Durchgangskanal durchströmt werden.

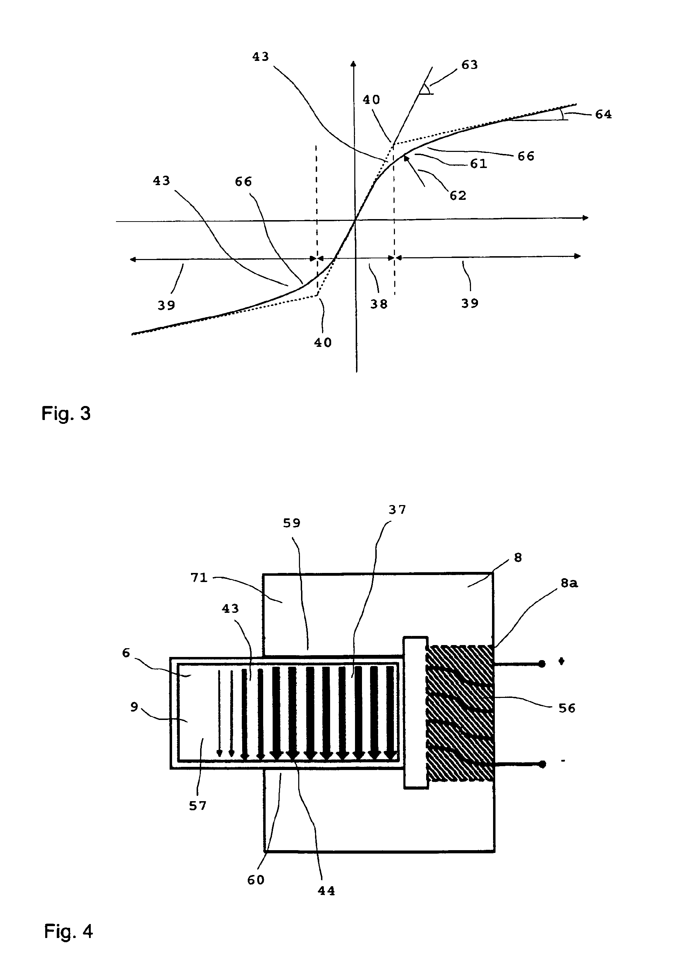

Rundungen im Kurvenverlauf nach Fig. 2 sind jedenfalls aber im Vergleich zu den Kurvenverläufen laut Fig. 3 unbedeutend. Fig. 3 zeigt einen möglichen bevorzugten Verlauf der Kennlinie 66 des MRF-Ventils 4. Deutlich erkennbar ist der ausgeprägte Übergangsbereich 43 mit der Rundung 61, die einen Radius 62 aufweist.

Solche Kurvenverläufe sind grundsätzlich auch mit Ventilen zu erreichen, bei denen geschwindigkeitsabhängig der Bypass mechanisch verändert wird oder der Spulenstrom eines Elektromagneten angepasst wird. Dazu ist aber eine aufwendige Analyse in Echtzeit im Mikro- oder Millisekundenbereich erforderlich. Die erfindungsgemäße Erzeugung dieser Kurvenverläufe ist jedoch mit deutlich weniger Aufwand verbunden und erfordert keinerlei Echtzeitanalyse.

Die Entstehung der Kurvenverläufe nach Fig. 3 wird mit Bezug auf die schematische Darstellung nach Fig. 4 erläutert.

Fig. 4 zeigt den schematischen Aufbau eines mit einem magnetorheologischen Fluid 9 betriebenen MRF-Ventils 4 mit Übergangsbereich 43. Dargestellt ist der Querschnitt durch einen Durchgangskanal, die Strömungsrichtung durch das Ventil ist quer und hier senkrecht zu dem dargestellten Schnitt ausgerichtet. Im C-förmigen Eisenkern 71 wird mittels Spule 56 oder mit einem in den Kern integrierten Dauermagneten 8a ein Magnetfeld 44 erzeugt. Die magnetischen Feldlinien schließen den Magnetkreis über den zwischen den Polen liegenden Durchgangskanal 6.

Alle an der Erzeugung und Führung des Magnetfelds beteiligten Elemente des Ventils werden als Magneteinrichtung 8 bezeichnet. Diese kann beispielsweise den Eisenkern 71, die Pole 59, 60, eine Spule 56 und/oder einen Dauermagneten 8a umfassen.

Der Bereich des Kanals 6, der zwischen den Polen 59, 60 liegt, wird üblicherweise von einem relativ homogenen Magnetfeld 44 durchsetzt und stellt den Sperrabschnitt 37 des Durchgangskanals 6 dar. Der Bereich des Durchgangskanals, der seitlich neben den Polen liegt, wird von einem nach außen abnehmenden magnetischen Streufeld durchsetzt und stellt den Übergangsbereich 43 dar. Die Größe des Übergangsbereichs 43 wird von der Stärke und Form des magnetischen Streufeldes bestimmt, welches wiederum hauptsächlich von der Geometrie des Kanals und der Pole, der Stärke des Magnetfeldes 44 und den verwendeten Materialien (deren Permeabilität) abhängt.

Ganz außen, im Bereich des Durchgangskanals 6 mit dem größten Abstand zu den Polen, ist kein Magnetfeld bzw. nur ein sehr geringes Streufeld vorhanden. Hier ist der Durchlassabschnitt 57, in dem das Fluid 9 vom Magnetfeld weitestgehend unabhängig strömen kann. In dem Durchlassabschnitt 57 ist das Magnetfeld insbesondere um einen Faktor 10 und vorzugsweise einen Faktor 100 kleiner ist als in dem Wirkbereich bzw. Sperrabschnitt 37.

In dem Durchlassabschnitt 57 wirkt im Mittel ein erstes Feld bzw. Magnetfeld mit einem ersten Durchschnittswert. In dem Übergangsbereich 43 wirkt im Mittel ein zweites Feld mit einem zweiten Durchschnittswert und in dem Sperrabschnitt 37 wirkt im Mittel ein drittes Feld mit einem dritten Durchschnittswert. Der dritte Durchschnittswert ist größer als der zweite Durchschnittswert und der zweite Durchschnittswert ist größer als der erste Durchschnittswert. Hier im Ausführungsbeispiel ist der zweite Durchschnittswert mindestens zehnmal größer als der erste Durchschnittswert. Der dritte Durchschnittswert ist mindestens zehnmal größer als der zweite Durchschnittswert.

Das Feld in dem Übergangsbereich 43 ist stark inhomogen, sodass das Verhältnis von größtem Feldwert zu kleinstem Feldwert innerhalb des Übergangsbereichs 43 größer als zehn und vorzugsweise größer als einhundert ist.

Aus dem Schema ist ersichtlich, dass, wenn die Magneteinheit 8 relativ zum Durchgangskanal 6 seitlich verschoben wird, sich das Verhältnis der drei Teilbereiche 37, 43, 57 aliquot bzw. anteilig ändert.

Sinngemäß kann auf die Magneteinheit 8 verzichtet werden und anstelle der Pole können Elektroden verwendet werden, wenn das Prinzip des Übergangsbereichs 43 auf ERF angewendet werden soll.

Stellt man sich den Weg einzelner Partikel durch das dargestellte Ventil 4 als Strömungsbahnen vor, wird der Unterschied zu einem Ventil nach dem Stand der Technik deutlich: der vom jeweils herrschenden Magnetfeld 44 abhängige Strömungswiderstand einer Strömungsbahn kann sich vom Widerstand benachbarter Strömungsbahnen unterscheiden. Je nach Feld und Druckdifferenz wird nur ein Teilbereich des verfügbaren Querschnitts durchströmt. In der Darstellung nach Figur 4 würde bei einem bestimmten Druck links außen im Durchgangskanal die größte Strömungsgeschwindigkeit herrschen, die Strömungsgeschwindigkeit im Bereich des Übergangsbereichs aber zum Sperrabschnitt hin abnehmen. Im Sperrabschnitt wird sich das Fluid bis zu einem gewissen Druck wie ein Festkörper verhalten und nicht strömen.

Ist das Feld nur entlang der Strömungsrichtung des Fluids inhomogen, über die jeweilige Querschnittsfläche des Durchgangskanals aber homogen, kann der Strömungswiderstand entlang einer einzelnen Strömungsbahn variieren, der Widerstandsverlauf ist aber bei allen Strömungsbahnen innerhalb eines Querschnitts gleich. Dadurch können sich keine Abschnitte (Randschichten) im Kanal ausbilden. Der durch das Ventil erzeugbare Strömungswiderstand kann ebenso durch ein absolut homogenes Feld mit einer entsprechenden Feldstärke erzeugt werden. Ein solches Ventil aus dem Stand der Technik wird bis zu einer bestimmten Druckdifferenz komplett sperren und bei Überschreiten dieser Druckdifferenz wird das Fluid im gesamten Durchgangskanal strömen.

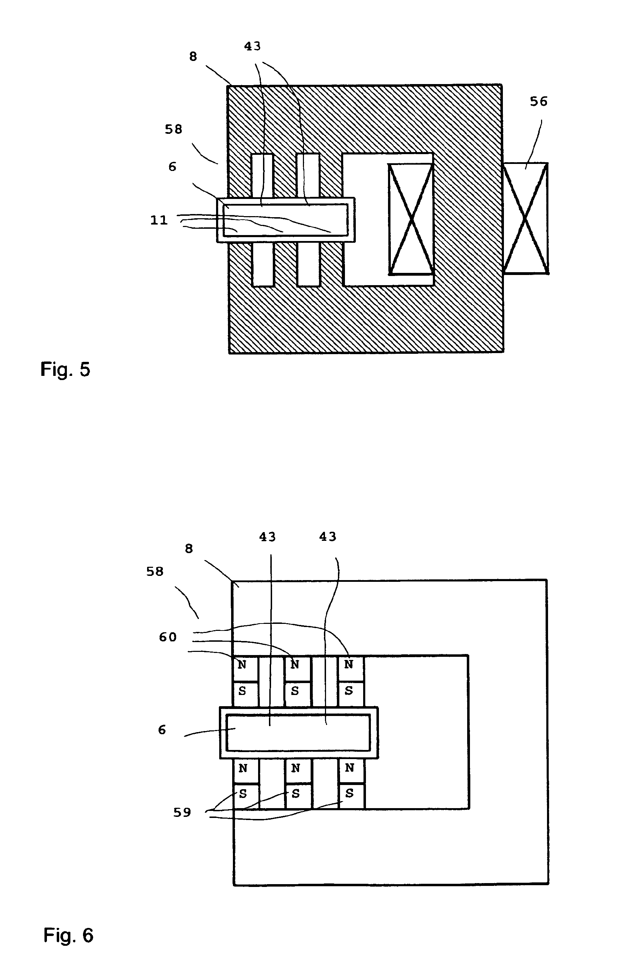

Die Fig. 5 und 6 zeigen den schematischen Aufbau einer Ausgestaltung des erfindungsgemäßen Prinzips. Dargestellt ist ein Querschnitt durch ein erfindungsgemäßes Ventil 4, die Strömungsrichtung des Fluids durch das Ventil liegt quer und hier normal zur Schnittebene. Dabei sind die Pole 59, 60 beidseitig des Durchgangskanals 6 in verschiedene Segmente geteilt. Dadurch wird das magnetische Feld in den Bereichen dieser Polpaare 59, 60 gebündelt und in den Bereichen dazwischen stellen sich mehrere Übergangsbereiche 43 und/oder Bypassbereiche 57 ein, wodurch deren Effekt verstärkt werden kann.

Fig. 5 zeigt als Magneteinheit 8 eine Elektrospule 56 zur Felderzeugung, in Fig. 6 dienen Dauermagnete 8 als Magneteinheit. Wenn die Dauermagnete als Polpaare 59, 60 direkt am Durchgangskanal 6 anliegen ändert sich das Streufeld gegenüber einem MRF-Ventil 4 mit ferromagnetischen Polpaaren der gleichen Form, bei dem das Magnetfeld in einer anderen Stelle der Magneteinheit 8 erzeugt wird. Dieses Verhalten kann zur Gestaltung der gewünschten Druck-Geschwindigkeitskennlinie des MRF-Ventils 4 eingesetzt werden.

Die Polung der verschiedenen Segmente kann unterschiedlich sein, sodass beim einen Pol 59, 60 das Magnetfeld von Oben nach Unten und beim danebenliegenden von Unten nach Oben verläuft. Ebenso können die Form oder Feldstärken der verschiedenen Segmente zueinander unterschiedlich sein.

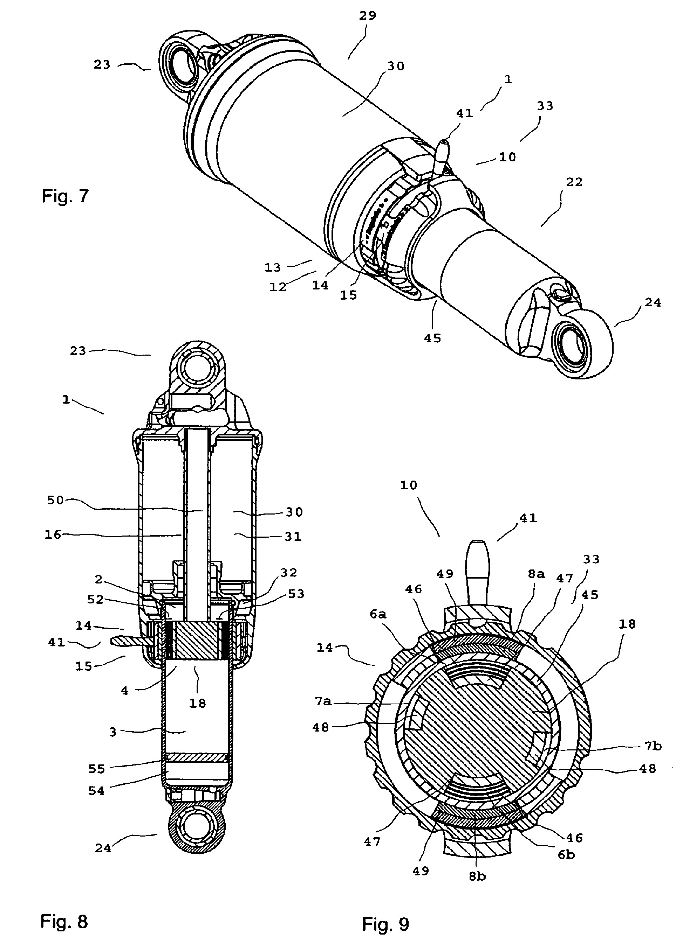

Die Fig. 7 bis 9 zeigen eine Ausführung des MRF-Ventils 4 mit Übergangsbereich als Dämpfer 1, der beispielsweise am Hinterbau eines Fahrrades eingesetzt werden kann.

Es wird ein einfacher Aufbau ermöglicht. Der Betrieb ist zuverlässig und das Fluid reagiert schnell. Es wird ein angenehmes Bedienkonzept realisiert, wobei der Dämpfer 1 einen großen Verstellbereich aufweist und die Dämpferkennlinie 66 eine ideale Kurvenform annehmen kann.

Denkbar ist es auch, Teile der Einstelleinrichtung 10 austauschbar zu gestalten. Der Hersteller kann so beispielsweise über unterschiedlich starke Magnete 8a, 8b oder anders geformte Drehringe 14, 15 den möglichen Einstellbereich des Dämpfers 1 anpassen, ohne Veränderungen im Innenbereich des Dämpfers 1 durchführen zu müssen.

Bei einem Dämpfer nach Stand der Technik muss beispielsweise das Shim-Paket im Inneren des Dämpfers geändert werden, um gewisse Bereiche (u.a. die Krümmung am Übergang von dem Low-Speed-Bereich 38 zu dem High-Speed-Bereich 39) der Dämpferkennlinie anpassen zu können, wofür der Dämpfer üblicherweise komplett demontiert werden muss.

Durch austauschbare Teile der Einstelleinrichtung kann dieselbe Einstellung wesentlich einfacher und schneller vorgenommen werden, möglicherweise auch durch den Fachhändler oder Kunden selbst.

Mit Bezug auf die Fig. 7 bis 9 wird im Folgenden ein weiteres Ausführungsbeispiel einer Dämpfereinrichtung 1 mit einem Ventil 4 beschrieben.

Die in Fig.7 perspektivisch dargestellte Dämpfereinrichtung 1 umfasst einen Dämpfer 22, der hier eine erste Dämpferkammer 2 und eine zweite Dämpferkammer 3 umfasst, die von einem Dämpfungskolben 18 voneinander getrennt sind. In dem Dämpfungskolben 18 ist ein Ventil 4 vorgesehen, welches Strömungskanäle 6 und 7 umfasst, die zur Dämpfung in der Druckstufe und in der Zugstufe dienen.

Sowohl die erste Dämpferkammer 2 als auch die zweite Dämpferkammer 3 und die Strömungskanäle 6 und 7 sind hier mit einem magnetorheologischen Fluid gefüllt, welches magnetorheologische Partikel, wie beispielsweise Carbonyleisenpulver in einer Trägerflüssigkeit enthält. Die Trägerflüssigkeit basiert vorzugsweise auf Öl mit Zusatzstoffen wie Stabilisatoren, Frostschutzmitteln, Abriebs- und Viskositätsverbesserern. Benachbart zu der Dämpferkammer 3 ist eine Ausgleichsfeder 54 vorgesehen, die über einen Trennkolben 55 von der Dämpferkammer 3 getrennt ist.

Dabei umfasst die Dämpfereinrichtung 1 eine als Gasfeder 30 ausgeführte Federeinrichtung 29, die näher am ersten Ende 23 angeordnet ist, während der Dämpfer 22 näher am zweiten Ende 24 angeordnet ist. Eine Kolbenstange 16 schließt sich an den Dämpferkolben 18 an und führt durch die Gasfeder 30. Die Gasfeder 30 umfasst eine erste Federkammer 31 und eine zweite Federkammer 32, die von einem Gaskolben getrennt sind.

Es ist hier eine Einstelleinrichtung 10 vorgesehen, die Dreheinheiten 14 und 15 als Einstellelemente 12 umfasst. Dabei dient die Dreheinheit 14 zur Einstellung der Dämpfung in der Zugstufe und die Dreheinheit 15 zur Einstellung der Dämpfung in der Druckstufe. Einwegventile 52 und 53 dienen zum gezielten Steuern von Druckstufe und Zugstufe.

In diesem Ausführungsbeispiel sind Dreheinheiten 14 und 15 einer Dreheinrichtung 13 als Einstelleinrichtung 10 vorgesehen. Die Dreheinheit 14 für die Zugstufe und die Dreheinheit 15 für die Druckstufe sind hier außen auf dem Dämpfergehäuse 45 vorgesehen und weisen keine direkte Verbindung zu den Strömungskanälen 6 und 7 auf. Hier wirkt das magnetische Feld 44 der an den Dreheinheiten 14 und 15 aufgenommenen Dauermagnete 8a und 8b durch die aus Leichtmetall, vorzugsweise Aluminium oder einem Faserverbundwerkstoff bestehende Wandung des Dämpfergehäuses 45 hindurch auf die Strömungskanäle 6 und 7 der Druckstufe bzw. Zugstufe.

Wie in Fig. 8 in einer geschnittenen Seitenansicht des Fahrraddämpfers 1 ersichtlich, weist die hohle Kolbenstange 16 im Innern eine Zusatzfeder 50 auf, die gegebenenfalls parallel zu der Gasfeder 30 geschaltet werden kann. Die Zuschaltung der Zusatzfeder 50 kann in einer hier nicht dargestellten Ausbauform automatisch in Abhängigkeit von der Gastemperatur erfolgen, wodurch die Temperaturabhängigkeit der Federkennlinie zumindest teilweise kompensiert werden kann. Bei Bedarf kann die Zusatzfeder 50 auch händisch zugeschaltet werden.

Die Beeinflussung der Dämpfung erfolgt an dem Dämpferkolben 18, auf dessen Außenoberfläche in vorbestimmten Winkelabständen Strömungskanäle 6 und 7 für die Druckstufe und die Zugstufe vorgesehen sind.

Zur Erhöhung der Kapazität und der Wirkung sind in dem Strömungskanal 6 für die Druckstufe Fächerelemente 46 vorgesehen, die im Wesentlichen konzentrisch zu der

Außenwand des Dämpfers 22 angeordnet sind und zu einer Verstärkung der Auswirkung des Magnetfeldes 44 führen. Durch die Fächerelemente 46 wird der Strömungskanal 6 in mehrere einzelne Dämpfungsspalte 6a, 6b aufgeteilt.

Entlang der Feldlinien des Magnetfelds 44 bilden sich Ketten in dem magnetorheologischen Fluid, wodurch der Durchtritt durch die mit den Fächerelementen 46 versehenen Strömungskanäle 6, 7 erschwert wird. Den maximalen Effekt erzielt man, wenn die Feldlinien normal auf die Oberflächen der Fächerelemente 46 verlaufen.

Die Fächerelemente 46 sind vorzugsweise aus ferromagnetischem Material, um den magnetischen Kreis nicht durch einen zusätzlichen "Luftspalt" zu belasten. Je nach gewünschtem Übergangsbereich kann es vorteilhaft sein, ein Material mit einer bestimmten magnetischen Sättigung zu verwenden. Beispielsweise ist im Dämpfer nach Figur 7 eine Stahllegierung mit einer magnetischen Sättigung von 1,6 Tesla vorgesehen.

Um bestimmte Kennlinien des Fahrraddämpfers 1 einstellen zu können, sind aber auch Fächer aus Dauermagneten oder auch Fächer aus magnetisch nicht leitendem Material denkbar.

Radial innerhalb der Strömungskanäle 6 und 7 sind an dem Dämpferkolben 18 magnetische Leiter 47 und 48 vorgesehen, die zu einer Umlenkung des auf die Strömungskanäle 6 und 7 einwirkenden Magnetfeldes dienen.

Die Form der magnetischen Leiter 47, 48 richtet sich nach der Gestaltung des magnetischen Kreises. Hier dargestellt ist eine Variante, bei der der Magnet 8a, 8b entlang der Durchflussrichtung zweigeteilt ist: ein Polpaar erzeugt Feldlinien in Richtung des Kolbens 18 zu den inneren magnetischen Leitern 47, 48, das zweite Polpaar erzeugt Feldlinien in Richtung des äußeren magnetischen Leiters 49. Der magnetische Kreis wird in Durchflussrichtung über die magnetischen Leiter 47, 48, 49 geschlossen.

Ein Partikel, das durch eine Strömungsbahn des Dämpfers strömt, wird beispielsweise entlang seiner Bahn zuerst durch im Wesentlich radial nach außen verlaufende Feldlinien magnetisiert und durchläuft im Bereich der Kolbenmitte ein schwächeres Feld, welches auch parallel zur Strömungsbahn verlaufen kann. Im hinteren Bereich seiner Strömungsbahn verlaufen die Feldlinien wieder radial nach innen, wodurch der Partikel umgekehrt polarisiert magnetisiert wird.

Wird der Dämpfungskolben 18 aus ferromagnetischem Material gefertigt, dann können die magnetischen Leiter 47, 48 entfallen.

Ein Bedienhebel 41 kann zur Einstellung dienen. Die als Drehringe ausgeführten Dreheinheiten 14 und 15 können aber auch direkt ergriffen und gedreht bzw. über einen Bowdenzug angesteuert werden.

In einer weiteren Variante erfolgt der Wechsel der Dämpfungseinstellung mit dem Bedienhebel 41, wobei die Dämpfung über die Dreheinheiten 14, 15 voreingestellt werden kann.

Bei der in Fig. 9 dargestellten ersten Position 33 sind die Dämpfungsspalte 6a und 6b für die Druckstufe dem maximalen Magnetfeld ausgesetzt, während die Dämpfungsspalte 7a und 7b des Strömungskanals 7 der Zugstufe im Wesentlichen keinem Magnetfeld ausgesetzt sind.

Wird der Bedienhebel 41 um einen gewissen Winkel im Uhrzeigersinn gegenüber der Stellung nach Fig. 9 verdreht, bis die Dämpfungsspalte 6a und 6b des Strömungskanals 6 jeweils zur Hälfte dem Magnetfeld der Dauermagneten 8a und 8b ausgesetzt sind, während die andere Hälfte der Dämpfungsspalte 6a und 6 b im Wesentlichen frei von einem Magnetfeld sind, so liegt eine mittlere Dämpfung der Druckstufe und eine geringe Dämpfung der Zugstufe vor.

Das bei dieser Magnetisierungsvariante in Strömungsrichtung inhomogene Magnetfeld kann durch Verdrehen der Magnete auch entlang der dargestellten Schnittebene inhomogen werden.

Analog zur Druckstufe können die Magnete und magnetischen Leiter der Zugstufe unabhängig von der Druckstufe verstellt und so die Dämpfung der Zugstufe variiert werden. Die Bedienung kann beispielsweise über die Dreheinheit 14 ausgeführt werden.

Die Strömungskanals werden in der Darstellung nach Figur 9 normal zur Zeichnungsebene durchströmt. Durch Verdrehen der Magnete kann sich entlang der dargestellten Schnittebene ein inhomogenes Magnetfeld in den Strömungskanals aufbauen. In Durchflussrichtung gesehen können so Bereiche ohne bzw. nur mit schwachem Magnetfeld und radial unter den Magneten Bereiche mit sehr starkem Magnetfeld entstehen. Dazwischen liegt ein Übergangsbereich, in dem das Magnetfeld einen Gradienten vom schwachen zum starken Feldbereich aufweist.

Der Strömungswiderstand einzelner Strömungsbahnen kann sich dadurch vom Widerstand von anderen, im selben Strömungskanal verlaufenden Strömungsbahnen deutlich unterscheiden. Je nach Bereich, in dem eine Strömungsbahn einen Strömungskanal durchquert, erfährt diese einen anderen Strömungswiderstand. Abhängig von Druckunterschied und Feldstärke kann nur ein bestimmter Teilbereich der dargestellten Querschnittsfläche eines Strömungskanals durchströmt werden.

Die dargestellte Ausführung mit Magnetisierung in axialer Richtung, also entlang der Durchflussrichtung, kann ein zusätzlich in Durchflussrichtung gesehen inhomogenes Magnetfeld erzeugen. Auf den zuvor beschriebenen Effekt hat das aber keinen Einfluss, da dieser auf einem inhomogenen Feld entlang des Kanalquerschnittes beruht. Auch mit einem in Durchflussrichtig völlig gleichförmigen Magnetfeld kann der Dämpfungskanal durch Verdrehen der Magnete in verschiedene Bereiche geteilt werden

Möglich ist es auch, die Drehringe 14, 15 exzentrisch zur Dämpferachse zu positionieren und für die Druckstufe sowie die Zugstufe jeweils nur einen Strömungskanals mit oder ohne Fächerelemente vorzusehen, so dass sich beim Verdrehen auch der Abstand zwischen dem Dauermagneten und dem Dämpfungsspalt, und somit die Magnetflussdichte im magnetorheologischen Fluid ändert.

In einer weiteren nicht dargestellten Ausführungsvariante könnten anstatt der Dauermagnete auch Abschirmelemente verdreht oder auch axial verschoben werden, welche den magnetischen Fluss durch die Dämpfungskanäle beeinflussen und den Übergangsbereich vergrößern können.

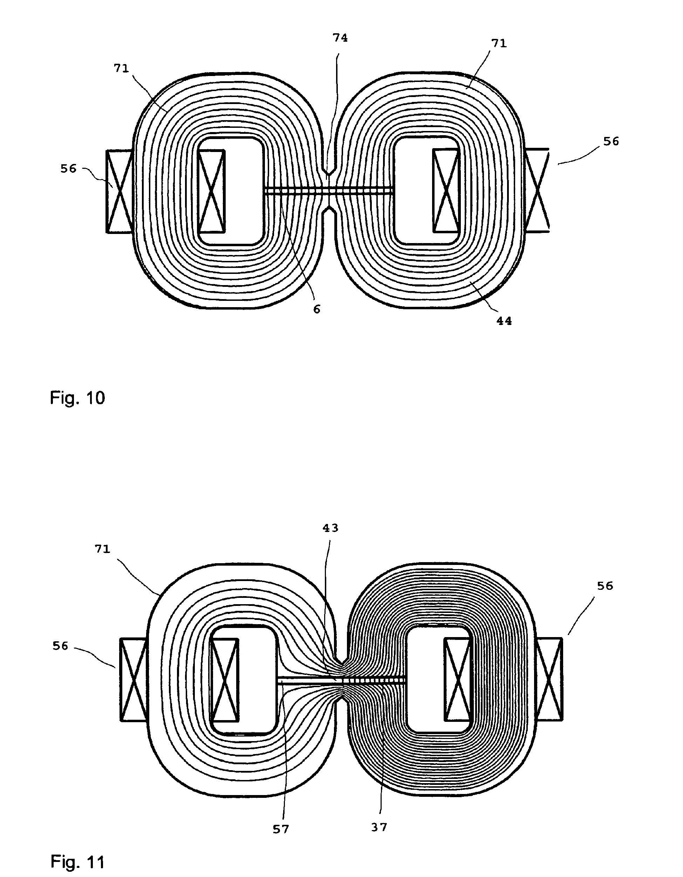

Figuren 10 und 11 zeigen ein weiteres Ausführungsbeispiel in stark schematischer Art und Weise. Dabei bildet der Eisenkern 71 etwa die Form einer "8" mit zwei etwa O-förmigen Teilbereichen, die miteinander zu einer "8" verbunden sind. An dem Verbindungssteg 74 ist der Strömungskanal 6 vorgesehen, der von beiden O-förmigen Hälften mit einem Magnetfeld aus elektrischen Spulen 56 beaufschlagbar ist. Die Durchflussrichtung durch den Strömungskanal ist senkrecht zur Zeichenebene. Dargestellt ist ein Querschnitt durch ein schematisches Ventil um die Funktionsweise besser darstellen zu können.

Wenn beide Spulen 56 ein gleiches Feld 44 erzeugen, wie in Fig. 10 dargestellt, wird der Strömungskanal 6 im Wesentlichen homogen beaufschlagt. Der Strömungskanal 6 sperrt bzw. zeigt einen Druck-Geschwindigkeitsverlauf nach Fig. 1.

Wenn beide Spulen 56 unterschiedliche Felder 44 erzeugen, wie in Fig. 11 dargestellt, wird etwa eine Hälfte des Strömungskanals 6 durch einen Sperrabschnitt 37 gesperrt, während ein weiterer Abschnitt praktisch keinem Feld ausgesetzt ist und einen Durchlass- oder Bypass-Abschnitt 57 bildet. Der mittlere Bereich ist ein Übergangsbereich 43 mit stark inhomogenem Magnetfeld. Dieser Übergangsbereich 43 sorgt für die Krümmung bzw. Abrundung 61 der Kennlinie 66.

Die verschiedenen Bereiche Sperr-, Durchlassabschnitt und Übergangsbereich sind Teilbereiche der Querschnittsfläche des Strömungskanals. Jeder Bereich verläuft entlang der Durchflussrichtung durch das Ventil. Über den Flächenanteil der einzelnen Bereiche am gesamten Querschnitt des Strömungskanals lässt sich der Volumenanteil des Strömungskanals einstellen, der der Durchströmung einen bestimmten Widerstand entgegensetzt. Beispielsweise definiert der Durchlassabschnitt den Volumenanteil des Strömungskanals, der feldfrei ist bzw. nur von einem relativ schwachen Magnetfeld durchflutet wird.

Über andere Feldstärken können andere Muster erzeugt werden. Mit einer entsprechenden Anzahl an elektrischen Spulen können beliebige Magnetfelder erzeugt werden.

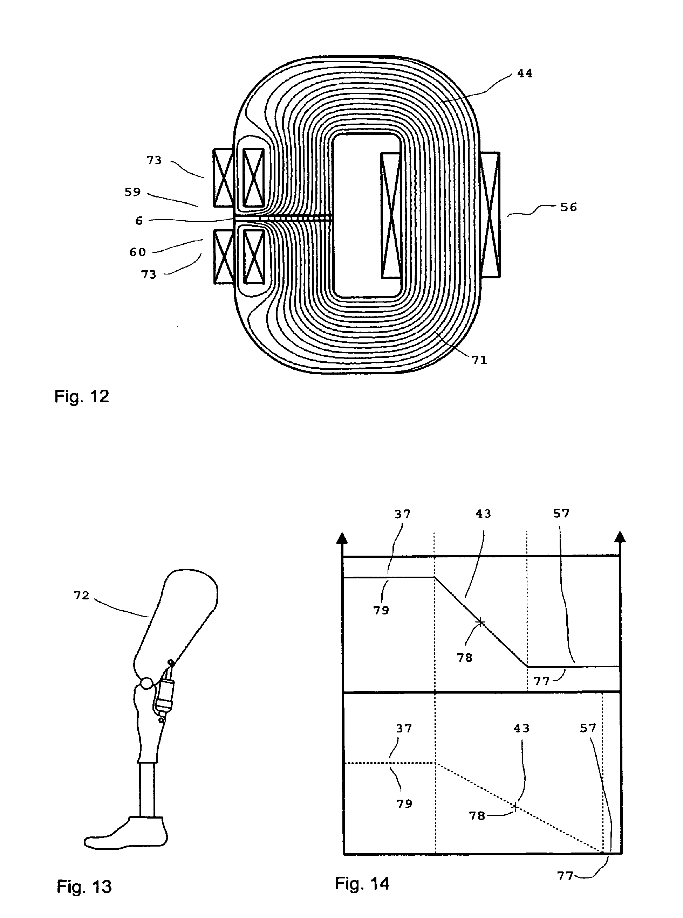

In Fig. 12 ist ein C-förmiger Eisenkern 71 mit einer Hauptspule 56 ausgerüstet, während an den Polen 59, 60 des C's kleinere Steuerspulen 73 vorgesehen sind, um die Kennlinie entsprechend anzupassen.

In allen Fällen können die Wände (Umhüllung) des vom Magnetfeld durchflossenen Strömungskanals 6 oder zwischen Magneteinheit 8 und Strömungskanal 6 liegender Elemente aus magnettechnisch unterschiedlich leitenden Materialien bis hin zu magnetisch nicht leitenden Materialien aufgebaut sein, wodurch sich im Strömungskanal 6 auch Bereiche unterschiedlicher Feldstärke einstellen lassen (Sperrbereich 37, Übergangsbereich 43, Durchlass- bzw. Bypassbereich 57). Z.B. erschwert eine teilweise Umhüllung des Strömungskanals 6 aus einem magnetisch nicht leitenden Material (Kunststoff, Edelstahl etc.) das Eindringen der Magnetfeldlinien in diesem Bereich, wodurch sich ein Bypassbereich 43 ergibt. Vorzugsweise kann dieser Bereich in der Mitte des Strömungskanals 6 gewählt werden, wodurch sich - wie bei kammartigen Elementen 58 - mehrere Übergangsbereiche 43 einstellen.

Den gleichen Effekt liefern im Strömungskanal 6 eingebaute Magnetfeldabschirmelement, Magnetfeldumleitelemente und reibflächenerhöhende Einbauten (Fächerelemente) aus unterschiedlichem Material.

Die Oberfläche des Strömungskanals 6 muss nicht eben sein.

Der Strömungskanal 6 kann erhöhende Einbauten aufweisen.

Der Strömungskanal 6 muss nicht rechteckig sein, er kann jede beliebige Form haben.

Fig. 13 zeigt als eine weitere mögliche Anwendung dieser Erfindung deren Einsatz als Dämpfer bei einer Beinprothese 72. Auch bei dieser Anwendung ist ein fließender Kraftübergang erforderlich, da der unharmonische Bewegungsablauf zum Stolpern führen könnte und den Tragekomfort somit stark einschränkt.

Fig. 14 zeigt schematisch zwei Verläufe der Feldstärke über dem Querschnitt des Strömungskanals 6. In der oberen Hälfte ist der Verlauf der Feldstärke stark schematisch in einer ersten Einstellung dargestellt.

Im Durchlass-Abschnitt 57 liegt ein etwa homogenes Feld vor, welches einen ersten Durchschnittswert 77 aufweist. In dem Übergangsbereich 43 ist das Feld stark inhomogen und weist einen starken Gradienten auf. Das Feld weist in dem Übergangsbereich 43 einen erheblich größeren zweiten Durchschnittswert 78 auf. Der Verlauf der Feldstärke über den Sperrabschnitt 37 ist etwa gleichbleibend hoch und weist einen dritten Durchschnittswert 79 auf. Der Flächenanteil des Sperrabschnitts 37 beträgt hier etwa ein Drittel, genauso wie auch der Flächenanteil des Übergangsbereichs 43 und der des Durchlass -Abschnitts 57. Der jeweilige Flächenanteil und das dort jeweils herrschende Feld hängen von den jeweils aktuellen Einstellbedingungen ab. Insbesondere können auch in dem Sperrabschnitt 37 und in dem Durchlass-Abschnitt 57 räumliche und/oder zeitliche Schwankungen der Feldstärke vorliegen. In der unteren Hälfte von Fig. 14 ist der Verlauf des Feldes über dem Querschnitt des Strömungskanals mit anderen Einstellungen dargestellt. Dort ist der Flächenanteil des Sperrabschnitts 37 wieder etwa ein Drittel. Der Übergangsbereich 43 ist erheblich größer und der Durchlass-Abschnitt 57 entsprechend kleiner. Die Durchschnittswerte 77, 78 und 79 sind entsprechend angepasst, wobei sich der dritte Durchschnittswert 79 nicht verändert haben muss. Diese Darstellung zeigt, dass das Feld über dem Strömungskanal stark inhomogen ist. Die Größe jedes Bestandteils bzw. Abschnittes kann einstellbar sein, sodass die Ventileigenschaften einfach angepasst werden können

Der schematisch dargestellte Verlauf der Feldstärke zeigt in allen Bereichen einen linearen Verlauf, Durchlass-Abschnitt 57 und Sperrabschnitt 37 werden im Übergangsbereich 43 durch eine Gerade verbunden. Die vorliegende Anmeldung gilt ausdrücklich für beliebige Feldverläufe, der beschriebene Verstellvorgang über die Anpassung der Anteile der Querschnittsfläche gilt sinngemäß auch für nichtlineare Verläufe.

Die Erfindung stellt ein Ventil 4 (MRF oder ERF) mit einem Übergangsbereich 43 zur Verfügung, wobei das Ventil 4 insbesondere wenigstens einen verstell- oder einstellbaren Übergangsbereich 43 aufweist. Der Übergangsbereich ist eine Teilfläche der Querschnittsfläche eines Strömungskanals 6 und wird durch ein quer zur Durchströmungsrichtung inhomogenes Feld erzeugt:

Es wird eine Nachbildung beliebiger Kennlinien ermöglicht, ohne mechanische Elemente (Federn etc.) zu verwenden oder eine aufwendige Echtzeitsteuerung zu benötigen.

Zur Einstellung können lineare oder drehbare Elemente vorgesehen sein. Das Einstellen ist ohne direkten mechanischen Kontakt durch eine Wand hindurch möglich. Die Einstellung kann auch nur über den elektrischen Strom durch eine Spule erfolgen, wobei auch Kombination von Spulen, Permanentmagneten und elektrischer oder mechanischer Verstellung denkbar sind.

Die Erzeugung des Magnetfeldes 44 kann über eine Spule 56 oder einen Dauermagneten 8a, 8b erfolgen. Zur Veränderung (Vergrößerung und/oder Verkleinerung) des Übergangsbereiches können Polpaare 59, 60 mit einer kammartigen Struktur 58 eingesetzt werden. Beispielsweise kann ein verstellbarer Magnet mehrere Lücken (Pole) haben, die Übergangsbereiche 43 im Magnetfeld entstehen lassen.

Die Stärke des Magnetfeldes 44 kann über eine Variation des Spaltabstandes (Abstand Magneteinrichtung zum Strömungskanal) eingestellt werden. Beispielsweise kann aber auch ein Zusatzmagnet angekoppelt werden, der das Magnetfeld verstärkt.

Denkbar ist auch ein teilweises oder vollständiges Abschwächen des Feldes über magnetische Kurzschlüsse außerhalb des zu beeinflussenden Kanalabschnitts, indem magnetisch leitendes Material zwischen Magneteinrichtung 8 und Durchgangskanal 6 gebracht wird. Ebenso können zumindest Teilbereiche des magnetischen Feldes abgeschwächt werden, wenn mit magnetisch nicht leitendem Material der "Luftspatt" im Magnetfeld vergrößert wird.

Möglich ist auch das Verändern der Feldstärke über Änderungen an den ferromagnetischen Polstücken, welche den magnetischen Kreis außerhalb des Durchgangskanals schließen. Über Form und die Sättigungsfeldstärke des Materials kann der gesamte magnetische Fluss beeinflusst werden.

Das Ventil 4 kann bei der Dämpfung an Dämpfern 22 eingesetzt werden. Mit elektrorheologischen oder magnetorheologischen Flüssigkeiten wird dafür gesorgt, dass der von diesen Flüssigkeiten durchflossene Kanal in Querschnittsrichtung durch den Kanal Feldstärken verschiedener Stärken unterliegt.

Der über eine Einstelleinrichtung 10 einstellbare Strömungswiderstand des Ventils 4 bleibt bis zur erneuten Betätigung der Einstelleinrichtung 10 dauerhaft bestehen. Die Ausführung mit mindestens einer elektrischen Spule 56 bietet gegenüber der mechanischen Verstellung der Einstellvorrichtung viele Vorteile wie beispielsweise schnelle und vollautomatische Anpassung durch eine Steuerung, benötigt aber Energie während der gesamten Dauer der Änderung vom stromlosen Grundzustand des Ventils 4. Gerade bei einer mobilen Anwendung wie beispielsweise einem Stoßdämpfer für ein Fahrrad kann ein permanenter Energiebedarf der elektrischen Ausführung nachteilig sein.

Eine vorteilhafte Lösung bietet eine weitere Ausführung des erfindungsgemäßen Ventils dadurch, dass das Magnetfeld durch eine zumindest teilweise aus hartmagnetischem Material bestehende Magneteinrichtung 8 dauerhaft erzeugbar ist. Dabei ist die Magnetisierung des hartmagnetischen Materials durch wenigstens einen magnetischen Impuls mindestens einer Spule dauerhaft veränderbar, um das in dem Steuerkanal wirkende Magnetfeld und damit den Strömungswiderstand des Ventils dauerhaft zu verändern.

Im Gegensatz zum Stand der Technik, wo das Magnetfeld des Magneten nur so lange durch das Magnetfeld der Spule verändert werden kann, wie in der Spule Strom fließt, kann ein erfindungsgemäßes Ventil die Magnetisierung der Magneteinrichtung über magnetische Impulse der Spule dauerhaft verändert werden. Dadurch kann beispielsweise durch einen einzelnen kurzen Impuls, der nur kurz Energie benötigt, die magnetischen Eigenschaften der Magneteinrichtung dauerhaft verändert werden. Es wird also nur zur Änderung der Feldstärke im Steuerkanal Energie benötigt.

Das durch die Magneteinrichtung im Steuerkanal erzeugte Magnetfeld wirkt ohne Energieversorgung und behält seine Feldstärke dauerhaft bei, solange es nicht durch entsprechend starke äußere Umstände wie beispielsweise andere Magnetfelder, Temperatureinflüsse oder natürliche Alterungsprozesse beeinflusst wird.

Mit zumindest einem Impuls aus zumindest einer Spule kann die dauerhafte Magnetisierung der Magneteinrichtung verändert werden, wodurch das Magnetfeld im Strömungskanal ohne weitere Energiezufuhr dauerhaft in Form und Stärke verändert werden kann. Beispielsweise kann über einen unterschiedlich starken Impuls zweier Spulen die Magneteinrichtung derart magnetisiert werden, dass diese dauerhaft ein quer zur Strömungsrichtung inhomogenes Feld erzeugen kann.

Vorzugsweise ist die dauerhafte Magnetisierung des hartmagnetischen Materials durch wenigstens einen magnetischen Impuls der Spule auf einen beliebigen Wert zwischen Null und der Remanenz einstellbar. Dabei kann vorzugsweise auch die Polarität der Magnetisierung veränderbar sein. Diesem statischen Magnetfeld kann durch die Spule ein dynamisches Magnetfeld überlagert werden, ohne dass die dauerhafte Magnetisierung des hartmagnetischen Material dadurch zu verändern.

Als dauerhaft gilt im Sinne dieser Anmeldung ein Zeitraum, der um ein Vielfaches länger ist als die Dauer des magnetischen Impulses. Insbesondere Zeiträume von wenigstens mehreren Sekunden, Minuten, Stunden, Tagen oder länger sind damit gemeint. Die eingestellte Magnetisierung muss aber ausdrücklich nicht ewig gleich bleiben, da sie natürlichen Schwankungen und Abschwächungserscheinungen unterliegen kann.

Im Unterschied dazu ist die Zeitdauer des zur Veränderung benötigten magnetischen Impulses relativ kurz. Die Zeitdauer des insbesondere einzigen kurzzeitigen Impulses liegt dabei vorzugsweise unter 1 Minute, vorzugsweise unter 1 Sekunde und insbesondere unter 10 Millisekunden. Die Stärke der Magnetisierung hängt von der Stärke des magnetischen Impulses, nicht aber von der Länge des magnetischen Impulses ab.

Als hartmagnetisch gilt ein Werkstoff dann, wenn seine Koerzitivfeldstärke über 1 kA/m und insbesondere über 10kA/m liegt. Bevorzugt hat der hartmagnetische Werkstoff eine Koerzitivfeldstärke kleiner als 1500kA/m, vorzugsweise kleiner als 500kA/m und besonders bevorzugt kleiner als 200kA/m. Als Material eignet sich beispielsweise Alnico oder eine magnetische Stahllegierung wie zum Beispiel FeCrCo, FeCoVCr und CuNiFe oder ein anderes Material mit vergleichbaren magnetischen Eigenschaften. Vorteilhaft an AlNico ist der Verlauf der Entmagnetisierungskurve, die hohe Temperaturstabilität und die guten chemischen Eigenschaften relativ zu anderen üblichen Magnetmaterialien.

Das hartmagnetische Material muss im bestehenden magnetischen Kreis einerseits eine hohe magnetische Feldstärke erzeugen können, andererseits darf die zur Ummagnetisierung nötige Energie nicht zu groß sein. Denkbar ist nur ein Teil der Magneteinrichtung aus hartmagnetischem Material zu fertigen und den Rest aus einem Material mit geringem magnetischem Widerstand (Reluktanz) und hoher Sättigungsflussdichte. Vorteilhafter Weise ist dieser Teil der Magneteinrichtung in der Spule bzw. in deren unmittelbarer Nähe angeordnet, da das Spulenfeld zur Ummagnetisierung dort am stärksten ist und auch am besten kontrolliert werden kann.

Möglich ist aber auch die gesamte Magneteinrichtung aus hartmagnetischem Material zu fertigen, wobei dann verhältnismäßig mehr Material zur Erzeugung des Feldes zur Verfügung steht bzw. die magnetischen Anforderungen an das Material kleiner werden.

Die erzeugbare Feldstärke der Spule reicht vorzugsweise aus, um die hartmagnetischen Teile der Magneteinrichtung bis zu ihrer magnetischen Sättigung zu magnetisieren.

Vorzugsweise sind wenigstens eine Kondensatoreinrichtung und wenigstens ein Energiespeicher, insbesondere eine Batterie, vorgesehen, um die Energie zur Erzeugung wenigstens eines magnetischen Impulses zur Verfügung zu stellen. Dadurch besitzt das Ventil auch ausgezeichnete Notlaufeigenschaften wenn beispielsweise die Energieversorgung einbricht oder die Steuerung ausfällt. Durch einen definierten Strompuls kann ein definierter Betriebszustand des Ventils sichergestellt werden.

In allen Ausgestaltungen ist vorzugsweise wenigstens eine Steuer- und/oder Kontrolleinrichtung vorgesehen, um magnetische Impulse der Spule gesteuert und/oder geregelt auszugeben.

Zur Erfassung der Ist-Daten und/oder der Stellung des Ventils kann wenigstens eine Sensoreinrichtung vorgesehen sein. Es können Sensoren zur direkten oder indirekten Bestimmung der Magnetisierung der Magneteinrichtung verwendet werden. Diese Sensoren bzw. deren Messergebnisse können von einer Steuer- oder Regeleinrichtung verwendet werden, um die Stärke der zu erzeugenden magnetischen Impulse zu bestimmen.

Es ist bevorzugt wenigstens eine Schwingkreiseinrichtung vorzusehen, um ein gedämpftes magnetisches Wechselfeld zur Entmagnetisierung erzeugen zu können. Die Entmagnetisierung des hartmagnetischen Materials kann über ein gedämpftes magnetisches Wechselfeld oder zumindest einen definierten magnetischen Impuls erfolgen. Möglich ist vor jeder Änderung der Magnetisierung die Magneteinrichtung zuerst zu entmagnetisieren und anschließend neu zu magnetisieren.

### Bezugszeichenliste:

- 1: Dämpfereinrichtung
- 2, 3: Dämpferkammer
- 4: Strömungsventil
- 6: Strömungskanal, Durchlasskanal
- 6a, 6b: Dämpfungsspalt für die Druckstufe
- 7: Strömungskanal, Durchlasskanal
- 7a, 7b: Dämpfungsspalt für die Zugstufe
- 8: Magneteinrichtung, Felderzeugungseinrichtung
- 8a, 8b: Dauermagnet
- 9: magnetorheologisches Fluid
- 10: Einstelleinrichtung
- 11: Anteil, Flächenanteil, Volumenanteil
- 12: Einstellelement
- 13: Dreheinrichtung
- 14: Dreheinheit für die Zugstufe
- 15: Dreheinheit für die Druckstufe
- 16: Kolbenstange
- 18: Dämpfungskolben
- 22: Dämpfer
- 23: erstes Ende
- 24: zweites Ende
- 29: Federeinrichtung
- 30: Gasfeder
- 31, 32: Federkammer
- 33: erste Position
- 37: Sperrabschnitt, Wirkabschnitt
- 38: Low-Speed-Bereich
- 39: High-Speed-Bereich
- 40: Knickpunkt
- 41: Bedienhebel
- 43: Übergangsbereich
- 44: Magnetfeld
- 45: Dämpfergehäuse
- 46: Fächerelement
- 47, 48, 49: magnetischer Leiter
- 50: Zusatzfeder
- 52, 53: Einwegventil
- 54: Ausgleichsfeder
- 55: Trennkolben
- 56: elektrische Spule
- 57: Durchlass-Abschnitt
- 58: Kammabschnitt, Kammstruktur
- 59, 60: Pole
- 61: Abrundung
- 62: Radius
- 63, 64: Steigung
- 66, 66a, 66b: Dämpferkennlinie
- 71: Eisenkern
- 72: Beinprothese
- 73: Steuerspule
- 74: Verbindungssteg
- 77: erster Durchschnittswert
- 78: zweiter Durchschnittswert
- 79: dritter Durchschnittswert

## Patentansprüche

1. Ventileinrichtung (4) mit wenigstens einem Durchgangskanal (6, 7), sowie mit wenigstens einer Felderzeugungseinrichtung (8), wobei in dem Durchgangskanal (6, 7) ein durch ein Feld beeinflussbares Fluid (9) vorgesehen ist und die Felderzeugungseinrichtung (8) dafür vorgesehen ist mit einem Feld (44) auf das durch ein Feld beeinflussbare Fluid (9) in dem Durchgangskanal (6, 7) einzuwirken,
wobei wenigstens eine Einstelleinrichtung (10) vorgesehen ist, mit welcher das in dem Durchgangskanal (6, 7) wirkende Feld (44) einstellbar ist,
**dadurch gekennzeichnet,**
**dass** wenigstens ein Anteil (11) der Querschnittsfläche des Durchgangskanals (6, 7) einstellbar ist, der einem Feld (44) bestimmter Stärke ausgesetzt ist, sodass der Durchgangskanal (6, 7) auch nur teilweise einem Feld (44) bestimmter Stärke aussetzbar ist.

2. Ventileinrichtung (4) nach Anspruch 1, wobei der Durchgangskanal (6, 7) wenigstens einen Übergangsbereich (43) und wenigstens einen in diesen übergehenden Sperrabschnitt (37) und/oder wenigstens einen in den Übergangsbereich (43) übergehenden Durchlass-Abschnitt (57) umfasst.

3. Ventileinrichtung (4) nach Anspruch 2, wobei sich der Durchgangskanal quer zur Durchströmungsrichtung in
- einen Durchlassabschnitt mit geringerer Feldstärke,
- einen Sperrabschnitt mit höherer Feldstärke und
- einen Übergangsbereich mit einem quer zum Kanalquerschnitts inhomogenen Feld, welcher den Durchlass- und den Sperrabschnitt verbindet,
einteilen lässt.

4. Ventileinrichtung (4) nach Anspruch 2 oder 3, wobei wenigstens ein Anteil (11) der Querschnittsfläche des Durchgangskanals (6, 7) einstellbar ist, der einem Feld (44) bestimmter Stärke ausgesetzt ist, sodass der Durchgangskanal (6, 7) auch nur teilweise einem Feld (44) bestimmter Stärke aussetzbar ist.

5. Ventileinrichtung (4) nach Anspruch 2, 3 oder 4, wobei mit der Einstelleinrichtung (10) der Flächenanteil (11) der Querschnittsfläche und/oder der der Volumenanteil (11) des Durchgangskanals (6, 7) einstellbar ist, auf welchen ein Feld (44) bestimmter Stärke einwirkt.

6. Ventileinrichtung (4) nach mindestens einem der vorhergehenden Ansprüche, wobei der Übergangsbereich (43) einstellbar ist.

7. Ventileinrichtung (4) nach mindestens einem der vorhergehenden Ansprüche, wobei Form und/oder Stärke des auf den Durchgangskanal (6, 7) einwirkenden Feldes (44) einstellbar ist.

8. Ventileinrichtung (4) nach mindestens einem der vorhergehenden Ansprüche, wobei die Einstelleinrichtung (10) wenigstens ein längsverschiebbares Einstellelement (12) umfasst.

9. Ventileinrichtung (4) nach mindestens einem der vorhergehenden Ansprüche, wobei die Einstelleinrichtung (10) wenigstens eine Dreheinrichtung (13) umfasst.

10. Ventileinrichtung (4) nach mindestens einem der vorhergehenden Ansprüche, wobei die Einstellung des Durchgangskanals ohne direkten mechanischen Kontakt nur über das Feld erfolgt.

11. Ventileinrichtung (4) nach mindestens einem der vorhergehenden Ansprüche, wobei das Feld und insbesondere das Magnetfeld (44) durch das Ventilgehäuse (45) hindurch wirkt.

12. Ventileinrichtung (4) nach mindestens einem der vorhergehenden Ansprüche, wobei der Anteil (11) des Dämpfungskanals (6, 7), der einem teilweisen Feld, d.h. dem Übergangsbereich vom schwächsten zum stärksten Bereich des Magnetfeldes (44), ausgesetzt ist, veränderbar ist.

13. Ventileinrichtung (4) nach mindestens einem der vorhergehenden Ansprüche, wobei durch mehrere Polpaare (59, 60) der Magneteinrichtung (8) mehrere Übergangsbereiche und/oder Bypassbereiche im Dämpfungskanal (6, 7) erzeugt werden können.

14. Ventileinrichtung (4) nach mindestens einem der vorhergehenden Ansprüche, wobei das Magnetfeld (44) von zumindest einer stromdurchflossenen Spule (56) und/oder zumindest einem Dauermagneten (8a, 8b) erzeugt wird.

15. Ventileinrichtung (4) nach mindestens einem der vorhergehenden Ansprüche, **dadurch gekennzeichnet, dass** die Magnetisierung der Magneteinrichtung (8), welche zumindest teilweise hartmagnetische Eigenschaften aufweisen kann, durch mindestens einen magnetischen Impuls mindestens einer Spule (56) dauerhaft verändert werden kann.

## Claims

1. A valve device (4) having at least one through channel (6, 7) and at least one field generating device (8) wherein a fluid (9) which can be influenced by a field is provided in the through channel (6, 7) and the field generating device (8) is provided to act on the field influenced fluid (9) in the through channel (6, 7) by means of a field (44), wherein at least one adjustment device (10) is provided with which the field (44) acting in the through channel (6, 7) is adjustable,
**characterized in**
**that** at least a portion (11) of the cross-sectional area of the through channel (6, 7) is adjustable, said portion being exposed to a field (44) of a specific intensity so that only part of the through channel (6, 7) can be exposed to a field (44) of a specific intensity.

2. The valve device (4) as claimed in claim 1 wherein the through channel (6, 7) includes at least one transition region (43) and at least one shut-off section (37) passing into said transition region and/or at least one transmission section (57) passing into the transition region (43).

3. The valve device (4) as claimed in claim 2 wherein the through channel can be divided transversely to the direction of flow into
- a transmission section having a lower field intensity,
- a shut-off section having a higher field intensity and
- a transition region having a field which is nonhomogeneous transversely to the channel cross section and connects the transmission and shut-off portions.

4. The valve device (4) as claimed in claim 2 or 3 wherein at least one portion (11) of the cross sectional area of the through channel (6, 7) is adjustable, said portion being exposed to a field (44) of a specific intensity such that only part of the through channel (6, 7) can be exposed to a field (44) of a specific intensity.

5. The valve device (4) as claimed in claim 2, 3 or 4 wherein the surface portion (11) of the cross sectional area and/or the volume portion (11) of the through channel (6, 7) on which a field (44) of a specific intensity acts, can be adjusted by means of the adjusting device (10).

6. The valve device (4) as claimed in at least one of the preceding claims wherein the transition region (43) is adjustable.

7. The valve device (4) as claimed in at least one of the preceding claims wherein the shape and/or intensity of the field (44) acting on the through channel (6, 7) is adjustable.

8. The valve device (4) as claimed in at least one of the preceding claims wherein the adjusting device (10) includes at least one longitudinally displaceable adjusting element (12).

9. The valve device (4) as claimed in at least one of the preceding claims wherein the adjusting device (10) includes at least one rotational device (13).

10. The valve device (4) as claimed in at least one of the preceding claims wherein the through channel is adjusted via the field only without any direct mechanical contact.

11. The valve device (4) as claimed in at least one of the preceding claims wherein the field and in particular the magnetic field (44) acts reaching through the valve housing (45).

12. The valve device (4) as claimed in at least one of the preceding claims wherein the portion (11) of the damping channel (6, 7) which is exposed to a partial field, i.e. the transition region from the weakest to the strongest region of the magnetic field (44), is modifiable.

13. The valve device (4) as claimed in at least one of the preceding claims wherein several transition regions and/or bypass regions can be generated in the damping channel (6, 7) by means of several pole pairs (59, 60) of the magnetic device (8).

14. The valve device (4) as claimed in at least one of the preceding claims wherein the magnetic field (44) is generated by at least one current-carrying coil (56) and/or at least one permanent magnet (8a, 8b).

15. The valve device (4) as claimed in at least one of the preceding claims, **characterized in that** the magnetization of the magnetic device (8), at least part of which can show magnetically hard properties, can be permanently modified by at least one magnetic pulse of at least one coil (56).

## Revendications

1. Dispositif de vanne (4) comprenant au moins un canal de passage (6, 7) ainsi qu'au moins un moyen de génération de champ (8), un fluide (9), pouvant être soumis à l'influence d'un champ, étant prévu dans le canal de passage (6, 7) et les moyens de génération de champ (8) étant prévus pour agir par le biais d'un champ (44) sur un fluide (9) pouvant être soumis à l'influence d'un champ dans le canal de passage (6, 7), au moins un dispositif de réglage (10) étant prévu, au moyen duquel le champ (44) agissant dans le canal de passage (6, 7) est ajustable,
**caractérisé en ce**
**qu'**est ajustable au moins une partie (11) de la section du canal de passage (6, 7) qui est soumise à un champ (44) d'une certaine intensité, de telle sorte que le canal de passage (6, 7) peut n'être aussi soumis que partiellement à un champ (44) d'une certaine intensité.

2. Dispositif de vanne (4) selon la revendication 1, le canal de passage (6, 7) comprenant au moins une zone de transition (43) et au moins un tronçon de blocage (37) aboutissant dans ladite zone et/ou au moins un tronçon de passage (57) aboutissant dans ladite zone de transition (43).

3. Dispositif de vanne (4) selon la revendication 2, le canal de passage étant divisé perpendiculairement au sens de flux, en
- un tronçon de passage à faible intensité de champ,
- un tronçon de blocage à intensité de champ assez élevée,
- une zone de transition à champ inhomogène perpendiculaire à la coupe de canal, ladite zone reliant le tronçon de passage au tronçon de blocage.

4. Dispositif de vanne (4) selon la revendication 2 ou 3, au moins une partie (11) de l'aire de section du canal de passage (6, 7) étant ajustable, ladite partie étant soumise à un champ (44) d'une certaine intensité, de telle sorte que le canal de passage (6, 7) peut n'être aussi soumis que partiellement à un champ (44) d'une certaine intensité.

5. Dispositif de vanne (4) selon la revendication 2, 3 ou 4, étant donné qu'est ajustable, à l'aide du dispositif de réglage (10), la partie surfacique (11) de l'aire de section et/ou la partie volumique (11) du canal de passage (6, 7) sur lesquelles agit un champ (44) d'une certaine intensité.

6. Dispositif de vanne (4) selon au moins l'une quelconque des revendications précédentes, ladite zone de transition (43) étant réglable.

7. Dispositif de vanne (4) selon au moins l'une quelconque des revendications précédentes, la forme et/ou l'intensité du champ (44) agissant sur le canal de passage (6, 7) étant réglables.

8. Dispositif de vanne (4) selon au moins l'une quelconque des revendications précédentes, le dispositif de réglage (10) comprenant au moins un élément de réglage (12) coulissant longitudinalement.

9. Dispositif de vanne (4) selon au moins l'une quelconque des revendications précédentes, le dispositif de réglage (10) comprenant au moins un dispositif rotatif (13).

10. Dispositif de vanne (4) selon au moins l'une quelconque des revendications précédentes, le réglage du canal de passage s'effectuant sans contact mécanique direct, seulement à l'aide du champ.

11. Dispositif de vanne (4) selon au moins l'une quelconque des revendications précédentes, le champ et notamment le champ magnétique (44) agissant au travers du boîtier de vanne (45).

12. Dispositif de vanne (4) selon au moins l'une quelconque des revendications précédentes, étant donné qu'est modulable la partie (11) du canal d'amortissement (6, 7) qui est soumise à un champ partiel c-a-d à la zone de transition entre la zone de plus faible intensité et la zone de plus grande intensité du champ magnétique (44).

13. Dispositif de vanne (4) selon au moins l'une quelconque des revendications précédentes, plusieurs couples de pôles (59, 60) du dispositif magnétique (8) permettant de générer plusieurs zones de transition et/ou de dérivation dans le canal d'amortissement (6, 7).

14. Dispositif de vanne (4) selon au moins l'une quelconque des revendications précédentes, le champ magnétique (44) étant généré par au moins une bobine (56) parcourue par du courant électrique et/ou par au moins un aimant permanent (8a, 8b).

15. Dispositif de vanne (4) selon au moins l'une quelconque des revendications précédentes, **caractérisé en ce que** la magnétisation du dispositif magnétique (8), lequel peut au moins présenter partiellement des caractéristiques magnétiquement dures, peut être modifiée durablement par au moins une impulsion magnétique d'au moins une bobine (56).
